## Europäisches Patentamt
## European Patent Office
## Office européen des brevets

(11) Veröffentlichungsnummer: **0 162 963**
**B1**

## (12) EUROPÄISCHE PATENTSCHRIFT

(45) Veröffentlichungstag der Patentschrift:
08.03.89

(21) Anmeldenummer: **84115596.3**

(22) Anmeldetag: **17.12.84**

(51) Int. Cl.⁴: **H 04 N 1/46,** B 41 J 3/04

(54) Tintenschreibeinrichtung zur Darstellung mehrfarbiger Zeichen und/oder Muster.

(30) Priorität: **27.04.84 DE 3415825**

(43) Veröffentlichungstag der Anmeldung:
**04.12.85 Patentblatt 85/49**

(45) Bekanntmachung des Hinweises auf die Patenterteilung:
**08.03.89 Patentblatt 89/10**

(84) Benannte Vertragsstaaten:
**DE IT NL SE**

(56) Entgegenhaltungen:
**DE-A-2 350 870**
**DE-A-3 009 333**
**DE-A-3 037 774**

**ELECTRONIC DESIGN, Band 30, Nr. 22, 28. Oktober 1982, Seiten 151-158, Waseca, Denville, US; S. COX u.a.: "Color graphics printers "slip into" computer systems"**

(73) Patentinhaber: **Siemens Aktiengesellschaft Berlin und München, Wittelsbacherplatz 2, D-8000 München 2 (DE)**

(72) Erfinder: **Milbrandt, Artur, Dipl.- Ing., Kunigundenstrasse 16, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Tintenschreibeinrichtung zur Darstellung mehrfarbiger Zeichen und/oder grafischer Muster gemäß dem Oberbegriff des Patentanspruches 1.

Zur Darstellung mehrfarbiger Zeichen und/oder grafischer Muster mit einer Tintenschreibeinrichtung ist es bekannt, mehrere getrennte, jeweils Tinte verschiedener Farbe enthaltende Tintenvorratsbehälter vorzusehen (DE-A-2 925 812). Es hat sich gezeigt, daß mit Tinten der Grundfarben Magenta, Cyan und Gelb eine optisch ansprechende Mehrfarbendarstellung möglich ist. Es hat sich als zweckmäßig herausgestellt, zusätzlich zu den farbigen Tinten auch noch Tinte schwarzer Farbe bereitzustellen

Ein wesentliches Element der Tintenschreibeinrichtung ist der Tintendruckkopf. In diesem sind mehrere Tintenkanäle angeordnet, die jeweils mit einem der Tintenvorratsbehälter in Verbindung stehen und aus denen unter der Einwirkung von den Tintenkanälen zugeordneten piezoelektrischen Antriebselementen Einzeltröpfchen ausgestoßen werden

Durch eine relative Bewegung zwischen dem Tintendruckkopf und dem Aufzeichnungsträger können bei entsprechender Ansteuerung der einzelnen Antriebselemente auf dem Aufzeichnungsträger rasterförmig aufgebaute einfarbige und mehrfarbige Zeichen oder Muster beliebiger Form dargestellt werden. Man spricht in diesem Zusammenhang auch von einer Sogenannten Matrix-Darstellung, da die einzelnen, die Zeichen oder Muster bildenden Tintentröpfchen in einer durch die Relativbewegung zwischen Aufzeichnungsträger und Schreibkopf, sowie durch die Ausstoßfrequenz bestimmten Matrix zeilen- und spaltenweise aufgetragen werden. Zum Erzeugen von Mischfarben, werden die entsprechenden Stellen des Aufzeichnungsträgers mehrmals mit Tintentröpfchen verschiedener Grundfarben bedruckt. Auf diese Weise lassen sich mit den Grundfarben Cyan, Magenta und Gelb die Farben Rot, Grün und Blau darstellen.

Bei der mehrfarbigen Darstellung von Zeichen oder Mustern mittels einzelner Tintentröpfchen tritt das Problem auf, daß beim Zusammentreffen unterschiedlicher Farben vor allem in den Randbereichen die Konturen unscharf sind, und daß die Farbflächen einen schmutzigen und verschwommenen optischen Eindruck hervorrufen. Der Grund dafür ist darin zu sehen, daß in diesen Fällen zur Bildung der Mischfarben mehrere Tintentröpfchen jeweils verschiedener Grundfarbe zeitlich nacheinander jeweils auf den gleichen Punkt des Aufzeichnungsträgers aufgebracht werden müssen. Mit jedem Auftrag eines Tintentröpfchens vergrößert sich der Durchmesser eines Bildpunktes, d.h. auf dem Aufzeichnungsträger entstehen Bildpunkte unterschiedlichen Durchmessers. Für den Betrachter des Schriftbildes oder des grafischen Musters entsteht dadurch der Eindruck von Unschärfe und von verschwommenen Farben. Insbesondere trifft das auf die Darstellung von Grafik zu. Bekanntlich bedient man sich bei einem Mehrfarbendrucker eines Verfahrens, bei dem jeweils sogenannte Bildelement (Pixel) definiert werden, die jeweils einen oder mehrere Bildpunkte aufweisen. Praktisch kann jeder Bildpunkt durch ein oder mehrere Tintentröpfchen bedruckt werden. Um eine gute Farbabstufung bzw. gewünschte Farbmischungen zu erhalten, werden die einzelnen Bildpunkte eines Bildelements nach einer bestimmten Regel, der sogenannten Dither-Matrix aufgefüllt. Unterschiedliche Bildpunktdurchmesser, wie sie durch das Aufeinanderspritzen einzelner Tintentröpfchen entstehen, führen zu unkontrollierten Überlappungen an den Rändern und damit zu Fehlfarben in den Überlappungsbereichen innerhalb eines Bildelementes.

Aufgabe der Erfindung ist es, in einer Mehrfarben-Tintenschreibeinrichtung sowohl die Konturen der Zeichen und Muster deutlicher, d.h. schärfer darzustellen, als auch den Farbkontrast und die Farbreinheit, insbesondere bei der Darstellung mehrfarbiger Grafik zu verbessern.

Diese Aufgabe wird gemäß der Erfindung durch die Merkmale des Patentanspruches 1 gelöst.

Weitere vorteilhafte Ausgestaltungen der Erfindung sind in den abhängigen Ansprüchen gekennzeichnet.

Der wesentliche mit der Erfindung verbundene Vorteil besteht darin, daß die einzelnen Bildpunkte definierte Abmessungen, d.h. Durchmesser aufweisen, und daß ungewollte und optisch störende Farbänderungen, insbesondere in den Überlappungsbereichen erheblich reduziert sind. Zugleich erhöht sich die Kontrastschärfe in den Randbereichen der Zeichen deutlich.

Gemäß Ausgestaltung der Erfindung ist es vorteilhaft, die Steuerung des Tintentröpfchenausstoßes durch die Steuerung der Dauer oder der Amplitude des den piezoelektrischen Wandlerelementen zugeführten Ansteuerimpulses zu beeinflussen. Das hat den Vorteil, daß der konstruktive Aufbau eines Tintenschreibkopfes, z. B. der Durchmesser der Düsen, nicht geändert werden muß.

Gemäß einer anderen Ausgestaltung der Erfindung wird jeweils mit jedem Einzeltröpfchenausstoß ein gleiches, konstantes Tintenvolumen auf den Aufzeichnungsträger gespritzt, wobei die Einstellung des Durchmessers eines Bildpunktes auf dem Aufzeichnungsträger unabhängig davon erfolgt, ob der Bildpunkt aus Tintentröpfchen einer oder mehr als einer Grundfarbe besteht. Der Durchmesser eines Bildpunktes ist in diesem Fall dadurch bestimmt, daß die Anzahl der Tintentröpfchen pro Bildpunkt konstant ist. Mit dieser Ausgestaltung ist im wesentlichen eine Reduzierung des Aufwandes für die Steuerschaltung verbunden.

Die Erfindung wird im folgenden anhand der Zeichnungen näher erläutert. Dort zeigen

Fig. 1 ein Beispiel für einen in üblicher Weise gebildetes Bildelement, der aus mehreren Bildpunkten einer Grundfarbe, bzw. aus mehreren Bildpunkten verschiedener Grundfarben aufgebaut ist,

Fig. 2 und Fig. 3 ein Beispiel für einen gemäß der Erfindung gebildetes Bildelement, das aus mehreren Bildpunkten einer Grundfarbe oder mehreren Grundfarben besteht,

Fig. 4, 5 und 6 Ausführungsbeispiele zur Durchführung der Erfindung.

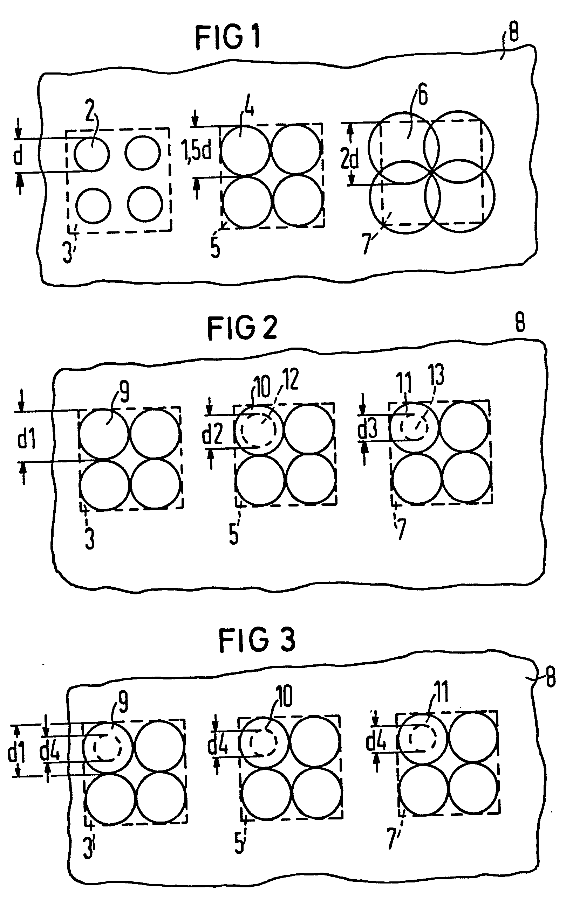

Jedes der in Fig. 1 dargestellte Bildelement (Pixel 2 x 2 Bildpunkte) 3, 5, 7 auf einem Aufzeichnungsträger 8, besteht jeweils aus vier Bildpunkten 2, 4, 6. Das Auffüllen eines Bildelementes geschieht nach einer an sich bekannten Regel, der sog. Dither-Matrix. Im dargestellten Beispiel besteht das Bildelement 3 aus vier Bildpunkten 2 jeweils einer Grundfarbe F1 oder F2 oder F3. Die vier Bildpunkte 4 des Bildelements 5 sind jeweils durch das Auftragen von zwei Grundfarben F1 + F2 oder F1 + F3 oder F2 + F3, und die vier Bildpunkte 6 des Bildfleckes 7 sind jeweils durch das Auftragen von drei Grundfarben F1 + F2 + F3 gebildet. Der Durchmesser eines Bildpunktes auf dem Datenträger ist hierbei nicht konstant. Er vergrößert sich mit der Anzahl der im Bereich des Bildpunktes aufgetragenen Grundfarben. Nimmt man für den Durchmesser eines Bildpunktes 2 des Bildelementes 3 einen Wert von d an, so haben die Bildpunkte 4 des Bildelementes 5 einen Durchmesser von etwa 1,5d und die Bildpunkte 6 des Bildelementes 7 einen Durchmesser von etwa 2d. Durch die Überlappung der Bildpunkte innerhalb eines Bildelementes bzw. durch die Überlappung nebeneinanderliegender Bildelementbereiche entsteht der eingangs erwähnte verschwommene schmutzige Farbeindruck bzw. eine unscharfe Kontur an den Rändern der durch die Bildelemente gebildeten Zeichen oder Mustern. Man erkennt weiterhin, daß in Bildelementen 3, die nur mit Bildpunkten einer Grundfarbe bedruckt werden, ein relativ hoher Weißanteil auftritt, d.h. die Farben weichen vom ursprünglich gewollten Farbeindruck stark ab, und vermitteln einen blaßen Eindruck.

Fig. 2 zeigt ein Beispiel, anhand dem die Erfindung erläutert wird. Demnach wird die Größe der ausgestoßenen Tintentröpfchen abhängig von der in einem Bildpunkt eines Bildelementes aufgetragenen Anzahl der Tröpfchen verschiedener Grundfarben derart eingestellt, daß jeweils Bildpunkte gleichen Durchmessers entstehen. In den Bildelementen 3, 5 und 7 von Fig. 2, die wiederum jeweils aus vier Bildpunkten bestehen, sind die Bildpunktdurchmesser d1 jeweils gleich groß, unabhängig davon, ob ein Bildpunkt aus einer Grundfarbe F1 oder F2 oder F3, wie im Beispiel der Bildpunkt 9, oder aus zwei Grundfarben F1 + F2 oder F1 + F3 oder F2 + F3, wie im Beispiel der Bildpunkt 10, oder aus drei Grundfarben F1 + F2 + F3, wie im Beispiel der Bildpunkt 11, bestehen. Zur Verdeutlichung sind in Fig. 2 die durch Einzeltröpfchen jeweils einer Grundfarbe gebildeten Bildpunkte 12 und 13 der Bildelemente 5 und 7 gestrichelt eingetragen. Dabei ist erkennbar, daß die Durchmesser d2 und d3 der durch jeweils eine Grundfarbe gebildeten Bildpunkte 10 und 11 in den Bildelementen 5 und 7 jeweils kleiner sind als der Durchmesser d1 eines Bildpunktes 9 im Bildelement 3, und daß weiterhin der Durchmesser d3 kleiner ist als d2. Mit dieser Maßnahme wird der Farbkontrast und die Farbreinheit eines Mehrfarbenbildes deutlich verbessert. Zugleich ergeben sich damit aber auch klarere Konturen der Zeichen und Muster, insbesondere an deren Rändern.

Fig. 3 zeigt ein Beispiel, anhand dem eine weitere im Rahmen der Erfindung liegende Ausgestaltung erläutert wird. Bei diesem Beispiel wird davon ausgegangen, daß die durch drei Grundfarben gebildete Mischfarbe durch die Farbe Schwarz ersetzt wird. In Fig. 3 sind wiederum drei Bildelemente 3, 5 und 7 dargestellt, die jeweils aus vier Bildpunkten 9, 10 und 11 bestehen. Jeder Bildpunkt 9, 10, 11 jedes Bildelementes 3, 5, 7, besitzt den gleichen Durchmesser d1. Das wird dadurch erreicht, daß die Anzahl der einen Bildpunkt bildenden Tintentröpfchen einer Grundfarbe variabel und abhängig davon einstellbar ist, wieviele Tintentröpfchen verschiedener Grundfarben den Bildpunkt bilden, wobei die Anzahl der Tintentröpfchen pro Bildpunkt jeweils konstant ist. Im Bildelement 3, der jeweils Bildpunkte einer Grundfarbe enthält, besteht in diesem Beispiel jeder Bildpunkt 9 aus zwei Tintentröpfchen jeweils gleichen Durchmessers d4 der Grundfarbe F1 oder F2 oder F3.

Im Bildelement 5, das jeweils Bildpunkte 10 zweier Grundfarben enthält, besteht jeder Bildpunkt ebenfalls aus zwei Tintentröpfchen jeweils gleichen Durchmessers d4, der beiden zur Darstellung vorgesehenen Grundfarben F1, F2 oder F1, F3 oder F2, F3. Im Bildelement 7 schließlich, das jeweils Bildpunkte 11 dreier Grundfarben enthalten würde, die jedoch in diesem Beispiel durch die Farbe F4, nämlich der Farbe Schwarz, ersetzt ist, besteht jeder Bildpunkt ebenfalls aus zwei Tintentröpfchen jeweils gleichen Durchmessers d4. Somit besteht jeder Bildpunkt 9, 10, 11, aus zwei Tintentröpfchen, die jeweils unmittelbar aufeinanderfolgend auf dieselbe Stelle des Aufzeichnungsträgers 8 aufgetragen werden. Der Durchmesser d1 jedes Bildpunktes 9, 10, 11 in jedem Bildelement 3, 5, 7 ist somit gleich groß.

Die Konstanz der Bildpunktdurchmesser wird durch eine steuerbare Einstellung der Tröpfchengröße oder durch eine gesteuerte Veränderung der Anzahl von Einzeltröpfchen einer Grundfarbe je Bildpunkt erreicht. Im ersten Fall geschieht das vorzugsweise durch eine Veränderung des Tröpfchenvolumens, d.h. durch eine Änderung derjenigen Tintenmenge, die mit jedem Tröpfchenausstoß abgegeben und auf den Aufzeichnungsträger gespritzt wird. Da zwischen dem mit jedem Tintentröpfchen ausgestoßenen Volumen und der Dauer eines Ansteuerimpulses für die den Düsen eines Tintendruckkopfes zugeordneten Antriebselementen ein unmittelbarer Zusammenhang besteht, ist es vorteilhaft, als veränderliche Steuergröße die Impulsdauer heranzuziehen. Eine andere Möglichkeit, das Volumen eines ausgestoßenen Tintentröpfchens zu verändern besteht darin, die Amplitude des Ansteuerimpulses entsprechend zu verändern. Beide Maßnahmen haben den Vorteil, daß keine Änderung der Geometrie der Tintenschreibeinrichtung selbst vorgenommen werden muß. Die zur Einstellung der Dauer bzw. der Amplitude des Ansteuerimpulses erforderlichen Steuergrößen stehen in einer Mehrfarbentintenschreibeinrichtung bereits sowieso zur Verfügung.

Im zweiten Fall geschieht das dadurch, daß die Anzahl der in jedem Bildpunkt aufgetragenen Tröpfchen konstant ist, daß z. B. bei drei Grundfarben jeder Bildpunkt stets durch zwei Tröpfchen besteht, wobei der Durchmesser jedes durch ein Tröpfchen gebildeten Tintenpunktes kleiner ist als der gewünschte Bildpunktdurchmesser. Besteht ein Bildpunkt aus Tröpfchen einer Grundfarbe, so werden zwei Tröpfchen dieser Grundfarbe aufgetragen; bei einem Bildpunkt, der aus Tröpfchen zweier Grundfarben besteht, werden ein Tröpfchen der einen und ein Tröpfchen der anderen Grundfarbe aufgetragen; bei einem Bildpunkt, der aus Tröpfchen sämtlicher drei Grundfarben besteht, werden zwei Tröpfchen der Farbe schwarz aufgetragen. Im Ergebnis weisen die Durchmesser der Bildpunkte jeweils den gleichen Wert auf, unabhängig davon ob es sich um Bildpunkte einer Grundfarbe oder einer Mischfarbe handelt.

In Ausgestaltung der Erfindung kann bei der Einstellung der Tröpfchengröße bzw. der Anzahl der einzelnen Tröpfchen auch die Eigenschaft des Aufzeichnungsträgers berücksichtigt werden. Das ist deshalb von Vorteil, weil die Durchmesser von auf dem Aufzeichnungsträger aufgetragenen Tintentröpfchen auch da von abhängig sind, ob die Tinte schnell oder langsam in den Aufzeichnungsträger eindringt. In diesem Zusammenhang spielt es z. B. eine Rolle, ob als Aufzeichnungsträger Papier oder Folien verwendet werden.

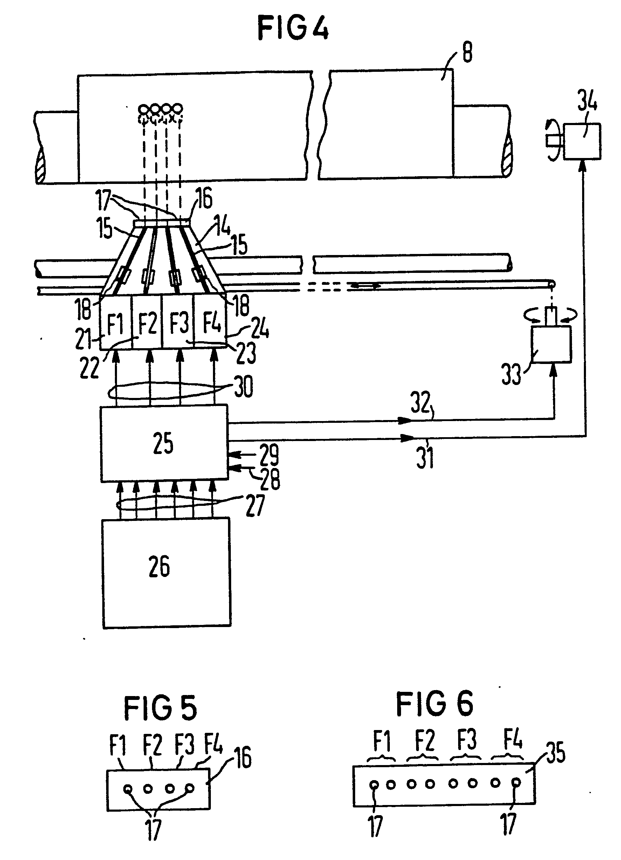

Ein Aus führungsbeispiel für eine Tintenscheibeinrichtung zur mehrfarbigen Darstellung von Zeichen und Mustern zeigen die Figuren 4, 5 und 6. Die Tintenschreibeinrichtung besteht im wesentlichen aus dem Druckkopf 14 mit den Tintenkanälen 15, die in Richtung auf den Aufzeichnungsträger 8 an einer sogenannten Düsenplatte 16 enden. Aus den in der Düsenplatte 16 entsprechend der für den Aufbau eines rasterförmigen Aufzeichnungsbildes angeordneten Öffnungen 17 treten die Tintentröpfchen aus und werden gegen den Aufzeichnungsträger 8 gespritzt. Im Ausführungsbeispiel bilden die Öffnungen 17, wie Fig. 5 zeigt, eine horizontale Reihe, wobei für jede Farbe F1, F2, F3 und F4 eine Öffnung 17 vorgesehen ist. Den Tintenkanälen 15 sind jeweils Antriebselemente 18, im Beispiel in Form von röhrenförmigen Piezowandlern zugeordnet. Jeder Tintenkanal 15 ist, jeweils mit einem von vier Tintenvorratsbehälter 21, 22, 23 und 24 verbunden, in denen Tinte der Farben F1, F2, F3 und F4 enthalten sind. Als Grundfarben werden z. B. die Farben Cyan, Magenta und Gelb verwendet. Der zusätzliche Tintenvorratsbehälter 24 enthält Tinte schwarzer Farbe. Das dargestellte Ausführungsbeispiel arbeitet nach dem sogenannten Unterdruckverfahren. Das bedeutet, daß der Meniskus der Tinte an den Öffnungen der Düsenplatte nach innen gewölbt ist.

Der Druckkopf 14 einschließlich der Tintenvorratsbehälter 21 bis 24 ist auf einem sogenannten Druckerwagen angeordnet, der seinerseits auf einer Führung gelegen ist und mittels Antriebssystem in Zeilenrichtung vor dem Aufzeichnungsträger hin- und her bewegt wird. Bei jedem Überfahren des Aufzeichnungsträgers 8 wird somit eine Rasterzeile gedruckt.

Die Ansteuerung der Piezowandler 18 erfolgt über eine Steuerschaltung 25. Bekanntlich wird bei einer impulsweisen Ansteuerung eines Piezowandlers 18 in der zugeordneten Düse 17 eine Art Stoßwelle erzeugt, wodurch der Unterdruck im Austrittsbereich dieser Düse kurzzeitig aufgehoben wird und eine definierte Tintenmenge oder ein definiertes Tintenvolumen aus dieser Düse ausgestoßen wird.

Durch kapillarische Effekte erfolgt im Anschluß daran wieder ein Nachströmen der Tinte aus dem Tintenvorratsbehälter

Die Einstellung der Impulsdauer erfolgt in der Steuerschaltung 25, der von einem Bildspeicher 26 entsprechende Steuersignale 27 zugeführt werden. Der Bildspeicher 26 seinerseits wird beispielsweise durch Ansteuersignale für einen Mehrfarbenbildschirm angesteuert. Der Bildspeicher 26 enthält entsprechend den zur Darstellung mit der Tintenschreibeinrichtung vorgesehenen Zeichen und grafischen Mustern die diesen entsprechenden Binärinformationen. Der Steuerschaltung 25 stehen darüber hinaus in Form der Signale 28 und 29 noch Eingabedaten über die Art bzw. über die Eigenschaften des Aufzeichnungsträgers , (z. B. Papier oder Folie, Saugfähigkeit usw.) sowie über die Eigenschaft der verwendeten Tinte (z. B. Trocknungszeit) zur Verfügung. Entsprechend den Steuersignalen 27, 28 und 29 werden in hier nicht näher beschriebener Weise sowohl die Ansteuerimpulse 30 für die Piezowandler 18 erzeugt und an diese abgegeben, als aber auch Ausgangssignale für die Bewegungen des Aufzeichnungsträgers 8, Signal 31, und des Schreibkopfes 14, an Signal 32, Antriebsvorrichtungen 33 und 34 abgegeben. Die Steuersignale 28 und 29 können mittels Schalter erzeugt werden, die von einer Bedienungsperson mit dem Einlegen des Aufzeichnungsträgers entsprechend dessen Eigenschaften betätigt werden.

Für den Fall, daß die Tröpfchengröße jeweils konstant, jedoch die Anzahl der Tröpfchen einer Grundfarbe je Bildpunkt einstellbar variiert wird, kann ein Druckkopf mit einer größeren Anzahl von Düsen und Öffnungen verwendet werden. Fig. 6 zeigt die Düsenplatte 35 solchen Druckkopfes, der im übrigen den gleichen Grundaufbau wie anhand von Fig. 4 beschrieben, aufweist. Unter der Voraussetzung, daß drei Grundfarben, nämlich Cyan, Magneta und Gelb sowie die Farbe Schwarz vorgesehen sind, enthält der Druckkopf 14 acht Tintenkanäle 15 und acht Öffnungen 17, von denen jeweils zwei für den Ausstoß von Tröpfchen einer Farbe vorgesehen sind. Im Beispiel sind die Öffnungen 17 in einer horizontalen Reihe angeordnet, so daß beim Überfahren des Aufzeichnungsträgers jeweils eine Rasterzeile gedruckt wird. Die Ansteuerung der piezoelektrischen Antriebselemente erfolgt wie anhand von Fig. 4 beschrieben, mittels Ansteuerimpulse einer Steuerung abhängig von den Signalen eines Bildspeichers. Im Unterschied zum Beispiel nach Fig. 4 erfolgt hier jedoch keine Änderung der Amplitude oder der Dauer der Ansteuerimpulse. Stattdessen wird hier die Folge der Ansteuerimpulse eingestellt. Um auf dem Aufzeichnungsträger einen Bildpunkt in einer Grundfarbe darzustellen, werden also zeitlich hintereinander die zwei entsprechenden Antriebselemente angesteuert und zwei Einzeltröpfchen ausgestoßen, die auf dem Aufzeichnungsträger übereinanderliegen. Zur Darstellung von Mischfarben, die aus zwei Grundfarben bestehen, erfolgt die Ansteuerung der betreffenden Antriebselemente derart, daß jeweils ein Einzeltröpfchen der einen und ein Einzeltröpfchen der anderen Grundfarbe ausgestoßen werden. Für die Darstellung eines aus drei Grundfarben bestehenden und der Farbe Schwarz entsprechenden Bildpunktes schließlich, werden zwei Einzeltröpfchen der Farbe Schwarz ausgestoßen. Der Durchmesser jedes somit gebildeten Bildpunktes ist zwar größer als der Durchmesser jedes Einzeltröpfchens; er hat jedoch stets eine definierte und konstante Größe.

Die Erfindung wurde an zwei Ausführungsbeispielen erläutert, bei denen die Öffnungen der Düsenplatte jeweils eine horizontale Reihe bilden. Es ist jedoch auch möglich, jeweils mehrere derartige horizontale Reihen untereinander anzuordnen und damit während des Überfahrens des Aufzeichnungsträgers gleichzeitig mehrere Rasterzeiten zu drucken. In diesem Fall enthält dann auch der Druckkopf eine entsprechend größere Anzahl von Tintenkanälen, deren piezoelektrischen Antriebselemente in der beschriebenen Weise angesteuert werden.

**Patentansprüche**

1. Tintenschreibeinrichtung zur Darstellung mehrfarbiger Zeichen und/oder grafischer Muster mit einem Druckkopf, dessen mit den Austrittsöffnungen auf einen Aufzeichnungsträger gerichtete Tintenkanäle jeweils ein piezoelektrisches Antriebselement zugeordnet ist, das durch in einer Steuerschaltung entsprechend den darzustellen den Zeichen oder Mustern gebildete Ansteuerimpulse einen tröpfchenweisen Ausstoß von Tinte bewirkt, mit mehreren, jeweils Tinte einer Grundfarbe enthaltenden Tintenvorratsbehältern, die jeweils mindestens einen Tintenkanal versorgen, und mit Antriebsvorrichtungen für den Druckkopf und für den Aufzeichnungsträger, um eine Relativbewegung zwischen Druckkopf und Aufzeichnungsträger zu erzeugen, wobei zur Darstellung von Mischfarben mindestens zwei sich überdeckende Einzeltröpfchen unterschiedlicher Grundfarbe auf dem Aufzeichnungsträger aufgebracht werden, dadurch gekennzeichnet, daß die Steuerschaltung (25) die an die piezoelektrischen Antriebselemente (18) abgegebenen Ansteuerimpulse (30) derart verändert, daß die Bildpunkte (9, 10, 11) auf dem Aufzeichnungsträger (8) unabhängig davon ob ein Bildpunkt (9) durch ein Einzeltröpfchen einer Grundfarbe (F1 ) oder ob ein Bildpunkt (10, 11 ) durch mehrere Einzeltröpfchen unterschiedlicher Grundfarben (F1, F2; F1, F3, F2, F3) besteht, jeweils einen gleichen, konstanten Durchmesser (d1) besitzen.

2. Tintenschreibeinrichtung nach Anspruch 1, dadurch gekennzeichnet, daß zur Einstellung des Durchmessers (d1) eines Bildpunktes (9, 10, 11, ) das mit dem Ausstoß eines Einzeltröpfchens auf dem Aufzeichnungsträger (8) aufgebrachte Tintenvolumen durch eine Veränderung der Impulsdauer der Ansteuerimpulse (30) einstellbar ist.

3. Tintenschreibeinrichtung nach Anspruch 1, dadurch gekennzeichnet, daß zur Einstellung des Durchmessers (d1) eines Bildpunktes (9, 10, 11) das mit dem Ausstoß eines Einzeltröpfchens auf dem Aufzeichnungsträger (8) aufgebrachte Tintenvolumen durch eine Veränderung der Amplitude der Ansteuerimpulse (30) einstellbar ist.

4. Tintenschreibeinrichtung nach Anspruch 1 bis 3, dadurch gekennzeichnet, daß das Tintenvolumen eines ausgestoßenen Einzeltröpfchens für die Darstellung eines Bildpunktes (9), der nur aus einer Grundfarbe (F1) besteht am größten und für die Darstellung eines Bildpunktes (10), der sämtliche Grundfarben (F1, F2, F3) enthält, am kleinsten ist.

5. Tintenschreibeinrichtung nach Anspruch 4, dadurch gekennzeichnet, daß das Tintenvolumen eines ausgestoßenen Einzeltröpfchens in Abhängigkeit von der Anzahl der in einem einzigen gemeinsamen Bildpunkt (9, 10, 11) aufgetragenen Tintentröpfchen unterschiedlicher Grundfarben (F1; F1, F2; F1, F2, F3) derart ist, daß die auf dem Aufzeichnungsträger (8) dargestellten Bildpunkte (9, 10, 11) jeweils einen gleichen Durchmesser (d1) aufweisen, und daß sich die Bildpunkte (9, 10, 11) in einer für die Darstellung der Zeichen oder Muster vorgegebenen Matrix jeweils mindestens berühren.

6. Tintenschreibeinrichtung nach Anspruch 1, dadurch gekennzeichnet, daß zur Einstellung des Durchmessers (d1) eines Bildpunktes (9, 10, 11) die Anzahl der Ansteuerimpulse (30) für die jeweils einen Tintenkanal einer Grundfarbe (F1, F2, F3, F4) zugeordneten Antriebselemente (18) einstellbar ist, derart, daß die Anzahl der einen Bildpunkte (9, 10, 11 in Fig. 3) auf dem Aufzeichnungsträger (8) bildenden Einzeltröpfchen einer Grundfarbe (F1, F2, F3, F4) abhängig von der Anzahl der den Bildpunkt (9, 10, 11) bildenden Einzeltröpfchen verschiedener Grundfarben ist.

7. Tintenschreibeinrichtung nach Anspruch 6, dadurch gekennzeichnet, daß die Anzahl der Ansteuerimpulse (30) und die Anzahl der in einem einzigen gemeinsamen Bildpunkt (9, 10, 11 in Fig. 3) aufgetragenen Einzeltröpfchen konstant und durch die Anzahl der zur Darstellung von Mischfarben vorgesehenen Anzahl von Grundfarben (F1, F2, F3, F4) bestimmt ist, und daß die auf dem Aufzeichnungsträger (8) dargestellten Bildpunkte (9, 10, 11 in Fig. 3) jeweils einen gleichen Durchmesser (d1) aufweisen und sich in einer für die Darstellung von Zeichen und/oder Mustern vorgegebenen Matrix jeweils mindestens berühren.

**Claims**

1. Ink-writing apparatus for the representation of multicoloured characters and/or graphic patterns with a print head, the ink channels of which, directed by its outlet orifices at a recording carrier, are in each case assigned a piezoelectric drive element, which effects, by trigger pulses formed in a control circuit according to the character or patterns to be represented, an ejection of ink in droplets, with a plurality of ink reservoirs, in each case containing ink of a basic colour, which reservoirs each supply at least one ink channel, and with drive devices for the print head and for the recording carrier in order to produce a relative movement between print head and recording carrier, at least two coinciding individual droplets of different basic colour being applied to the recording carrier for the representation of mixed colours, characterized in that the control circuit (25) changes the trigger pulses (30) emitted to the piezoelectric drive element (18) in such a way that the image dots (9, 10, 11) on the recording carrier (8) in each case have a same, constant diameter (d1) irrespective of whether an image dot (9) consists of an individual droplet of a basic colour (F1) or whether an image dot (10, 11) consists of several individual droplets of different basic colours (F1, F2; F1, F3, F2, F3).

2. Ink-writing apparatus according to Claim 1, characterized in that, for setting the diameter (d1) of an image dot (9, 10, 11), the volume of ink applied to the recording carrier (8) with the ejection of an individual droplet can be set by a variation of the pulse duration of the trigger pulse (30).

3. Ink-writing apparatus according to Claim 1, characterized in that, for adjusting the diameter (d1) of an image dot (9, 10, 11), the volume of ink applied to the recording carrier (8) with the ejection of an individual droplet can be set by a variation of the amplitude of the trigger pulses (30).

4. Ink-writing apparatus according to Claims 1 to 3, characterized in that the volume of ink of an ejected individual droplet is greatest for the representation of an image dot (9) which consists only of one basic colour (F1) and is smallest for the representation of an image dot (10) which contains all basic colours (F1, F2, F3).

5. Ink-writing apparatus according to Claim 4, characterized in that the volume of ink of an ejected individual droplet can be varied as a function of the number of ink droplets of different basic colours (F1; F1, F2; F1, F2, F3) applied in a single common image dot (9, 10, 11) such that the image dots (9, 10, 11) represented on the recording carrier (8) in each case have a same diameter (d1), and in that the image dots (9, 10, 11) in each case at least touch in a matrix specified for the representation of the characters or patterns.

6. Ink-writing apparatus according to Claim 1, characterized in that, for setting the diameter (d1) of an image dot (9, 10, 11), the number of trigger pulses (30) for the drive elements (18) in each case assigned to an ink channel of a basic colour (F1, F2, F3, F4) can be set such that the number of individual droplets of a basic colour (F1, F2, F3, F4) forming an image dot (9, 10, 11 in Fig. 3) on the recording carrier (8) is dependent on the number of individual droplets of different basic colours forming the image dot (9, 10, 11).

7. Ink-writing apparatus according to Claim 6, characterized in that the number of trigger pulses (30) and the number of individual droplets applied in a single common image dot (9, 10, 11 in Fig. 3) is constant and is determined by the number of basic colours (F1, F2, F3, F4) provided for the representation of mixed colours, and in that the image dots (9, 10, 11 in Fig. 3) represented on the recording carrier (8) in each case have a same diameter (d1) and in each case at least touch in a matrix specified for the representation of characters and/or patterns.

## Revendications

1. Dispositif d'écriture à encre pour représenter des signes et/ou des modèles graphiques multicolores, comportant

- une tête d'impression aux divers canaux à encre de laquelle, qui ont leurs ouvertures de sortie dirigées sur un support d'enregistrement, est associé un élément piézoélectrique de commande qui provoque, par des impulsion d'attaque formées dans un circuit de commande, en fonction des signes ou modèles à représenter, l'éjection de l'encre par gouttelettes,

- plusieurs réservoirs à encre, dont chacun contient une couleur fondamentale et alimente au moins un canal à encre, et

- des dispositifs de commande pour la tête d'impression et pour le support d'enregistrement en vue de produire un mouvement relatif entre la tête d'impression et le support d'enregistrement, au moins deux gouttelettes individuelles de couleur fondamentale qui se recouvrent étant déposées sur le support d'enregistrement pour la représentation de couleurs mélangées,

caractérisé par le fait

que le circuit de commande (25) modifie de telle façon les impulsions d'attaque (30) fournies aux éléments piézoélectriques de commande (18), que les points d'image (9, 10, 11) possèdent chacun sur le support d'enregistrement (8) un diamètre identique et constant (d1), indépendamment du fait qu'un point d'image (9) est constitué par une gouttelette individuelle d'une couleur fondamentale (F1) ou qu'un point d'image (10, 11) est constitué par plusieurs goutellettes individuelles de couleurs fondamentales différentes (F1, F2; F1, F3, F2, F3).

2. Dispositif d'écriture à encre selon la revendication 1, caractérisé par le fait que pour ajuster le diamètre (d1) d'un point d'image (9, 10, 11), le volume d'encre déposé sur le support d'enregistrement (8) par l'éjection d'une gouttelette individuelle, est susceptible d'être ajusté par une modification de la durée d'impulsion de l'impulsion d'attaque.

3. Dispositif d'écriture à encre selon la revendication 1, caractérisé par le fait que pour ajuster le diamètre (d1) d'un point d'image (9, 10, 11), le volume d'encre qui est déposé sur le support d'enregistrement (8) par l'éjection d'une gouttelette individuelle, est susceptible d'être ajusté par une modification de l'amplitude de l'impulsion d'attaque (30).

4. Dispositif d'écriture à encre selon les revendications 1 à 3, caractérisé par le fait que le volume d'encre d'une gouttelette individuelle qui a été éjectée pour la représentation d'un point d'image (9), qui n'est constitué que par une couleur fondamentale (F1), est le plus grand, et est le plus petit pour la représentation d'un point d'image (10) qui comporte toutes les couleurs fondamentales (F1, F2, F3).

5. Dispositif d'écriture à encre selon la revendication 4, caractérisé par le fait que le volume d'encre d'une gouttelette individuelle qui a été éjectée, est tel, en fonction du nombre de gouttelettes d'encre de couleurs fondamentales différentes (F1; F1, F2; F1, F2, F3) et qui ont été déposées en un point d'image commun et unique, que les points d'image (9, 10, 11) qui sont représentés sur le support d'enregistrement (8), présentent respectivement un seul et même diamètre (d1), et que les points d'image (9, 10, 11) se touchent, au moins, respectivement, dans une matrice prédéterminée pour la représentation des signes ou des modèles.

6. Dispositif d'écriture à encre selon la revendication 1, caractérisé par le fait que, pour ajuster le diamètre (d1) d'un point d'image (9, 10, 11), le nombre des impulsions d'attaque (30) pour les éléments de commande (18) qui sont associés respectivement à un canal à encre d'une couleur fondamentale (F1, F2, F3, F4), est réglable, et cela de telle façon que le nombre des gouttelettes individuelles d'une couleur fondamentale (F1, F2, F3, F4) qui forment un point d'image (9, 10, 11 dans la figure 3) sur le support d'enregistrement, dépend du nombre de gouttelettes individuelles, de couleurs fondamentales différentes, qui forment le point d'image (9, 10, 11).

7. Dispositif d'écriture à encre selon la revendication 6, caractérisé par le fait que le nombre des impulsions d'attaque (30) et le nombre des gouttelettes individuelles qui sont déposées en un seul et même point d'image (9, 10, 11 dans la figure 3) est constant et est déterminé par le nombre de couleurs fondamentales (F1, F2, F3, F4) qui sont prévues, pour la représentation de couleurs mélangées et que les points d'images (9, 10, 11 dans la figure 3) qui sont représentés sur le support d'enregistrement (8), possèdent respectivement un seul et même diamètre (d1) et sont, pour le moins, en contact entre eux dans une matrice prédéterminée pour la représentation de signes et/ou de modèles.

FIG 1

FIG 2

FIG 3

## FIG 4

## FIG 5

## FIG 6